# EUROPEAN PATENT APPLICATION

(11) **EP 4 503 237 A1**
(43) Date of publication of application: **05.02.2025**
(21) Application number: 22946418.5
(22) Date of filing: 22.07.2022
(51) Int. Cl.: H01M 10/0587, H01M 50/40

(54) **MANUFACTURING METHOD AND DEVICE FOR ELECTRODE ASSEMBLY, BATTERY CELL, BATTERY AND ELECTRICAL DEVICE**

(30) Priority: 17.06.2022 WO PCT/CN2022/099551
(71) Applicant: Contemporary Amperex Technology Co., Limited, Ningde, Fujian 352100 (CN)
(72) Inventor: LI, Cheng, Ningde, Fujian 352100 (CN); XU, Chong, Ningde, Fujian 352100 (CN); YANG, Jianrui, Ningde, Fujian 352100 (CN)
(74) Representative: Ziebig Hengelhaupt Intellectual Property Attorneys Patentanwaltskanzlei PartGmbB
(86) International application number: PCT/CN2022/107434
(87) International publication number: WO 2023/240745

(57) **Abstract**

A manufacturing method and a manufacturing equipment of an electrode assembly, a battery cell, a battery, and an electrical device. The manufacturing method of the electrode assembly specifically includes: providing roll materials including: a cathode plate roll (4000), a separator roll (2000), and an anode plate roll (3000), in which, the separator roll (2000) includes a separator body (231) and an early warning coating (232) arranged on the separator body (231); the separator body (231) has a head end (a) and a tail end (b) at two opposite ends along a winding direction (F1) thereof; and the early warning coating (232) is configured to be spaced from the tail end (b) by a first preset length (L1); stacking and winding a cathode plate (234) of the cathode plate roll (4000), the separator body (231) of the separator roll (2000), and an anode plate (233) of the anode plate roll (3000); and detecting, in the winding process, whether the early warning coating (232) is arranged on the separator body (231).

## Description

### CROSS-REFERENCE

This application claims the benefit of International Patent Application No. PCT/CN2022/099551 with an international filing date of Jun. 17, 2022, titled "MANUFACTURING METHOD AND MANUFACTURING EQUIPMENT OF ELECTRODE ASSEMBLY, BATTERY CELL, BATTERY, AND ELECTRICAL DEVICE", the contents of which are incorporated herein by reference.

### TECHNICAL FIELD

The present application relates to the technical field of batteries, and more particularly to a manufacturing method and a manufacturing equipment of an electrode assembly, a battery cell, a battery, and an electrical device.

Energy saving and emission reduction are the key to the sustainable development of the automobile industry, and electric vehicles have become an important part of the sustainable development of the automobile industry due to their energy-saving and environmental protection advantages. For electric vehicles, battery technology is an important factor in its development. The electrode assembly, also known as the bare battery cell, is an important part of the battery. During the production of the electrode assembly, the separator body needs to be provided as an important insulating part.

The separator bodies are generally wound to form a separator roll after the production is completed, and insulating connectors are arranged between adjacent separator bodies to connect all the separator bodies into a whole. In the subsequent manufacturing process, it is necessary to perform a winding process on each separator body from the separator roll to finally obtain the electrode assembly.

However, in the winding process, it is easy to produce a broken band of the separator body or the phenomenon that the connectors between adjacent separator bodies are wound inside the electrode assembly, thereby making the production quality and production efficiency of the electrode assembly low.

### SUMMARY

In view of this, the application provides a manufacturing method and a manufacturing equipment of electrode assembly, a battery cell, a battery, and an electrical device, which can reduce the occurrence of the broken band in the production process of the electrode assembly or the winding of the connector into the electrode assembly leading to scrapped electrode assembly, so as to improve the production quality and production efficiency of the electrode assembly.

In a first aspect, the present application provides a manufacturing method of an electrode assembly, comprising steps of:
providing roll materials comprising: a cathode plate roll, a separator roll, and an anode plate roll. The separator roll comprises a separator body and an early warning coating arranged on the separator body; the separator body has a head end and a tail end at two opposite ends along a winding direction; and the early warning coating is configured to be spaced from the tail end by a first preset length;
stacking and winding a cathode plate of the cathode plate roll, the separator body of the separator roll, and an anode plate of the anode plate roll; and
detecting, in the winding process, whether the early warning coating is arranged on the separator body.

In this way, by detecting the early warning coating, the tail end of the separator body is early warned in advance, so as to avoid the case where insufficient length of the tail end leads to a broken band, or the case where a non-separator body in connection with the tail end is directly wound inside the electrode assembly.

In some embodiments, after the step of detecting whether the early warning coating is arranged on the separator body, the method further comprises:
controlling, if so, the cathode plate and the anode plate to stop winding, and pulling the separator roll to continue winding by a distance equal to or greater than the first preset length and then stopping the separator roll from winding.

In this way, it is avoided the phenomenon that the connector is wound into the electrode assembly or the case where the broken tail end of the separator body affects the quality of the electrode assembly.

In some embodiments, the step of controlling the cathode plate and the anode plate to stop winding specifically comprises: controlling a cutter to cut off the cathode plate; and controlling the cutter to cut off the anode plate.

The cutter is arranged on a position near the winding structure of winding apparatus, to cut the anode plate and cathode plate that have been wound onto the winding mechanism off from the anode plate roll and the cathode plate, respectively, such that the winding of the cathode plate and the anode plate is stopped in advance.

In some embodiments, after the step of pulling the separator roll to continue winding by the distance equal to or greater than the first preset length and then stopping the separator roll from winding, the method further comprises: controlling the cutter to cut off the separator body.

The cutter is controlled to cut off the separator body, and the connector is also cut off from the separator roll, thereby preventing the connector from affecting a next winding of the electrode assembly.

In some embodiments, the step of detecting whether the early warning coating is arranged on the separator body specifically comprises:
arranging a detection apparatus on a convey path of the separator body; and detecting, by the detection apparatus, whether the separator body aligned with the detection apparatus is provided with the early warning coating.

All the separator bodies will be conveyed through this convey path and be wound onto the winding apparatus to form the final electrode assemblies. By arranging the detection apparatus, and enabling the detection apparatus to fit with the early warning coating, the early warning coating can be recognized

In some embodiments, the step of detecting, by the detection apparatus, whether the separator body aligned with the detection apparatus is provided with the early warning coating specifically comprises:
detecting whether an area having a color difference with the separator body is arranged on the separator body, in which, an RGB value of a range of the color difference is between 1 and 225.

The RGB value of the range of the color difference between the separator body and the early warning coating is limited to between 1 and 225, so as to ensure that the color difference of the early warning coating can be obviously distinguished from the separator body and therefore be recognized to have the early warning effect.

In some embodiments, the step of detecting, by the detection apparatus, whether the separator body aligned with the detection apparatus is provided with the early warning coating specifically comprises:
detecting whether an area having a color difference with the separator body is arranged on the separator body; in which, an RGB value of a range of the color difference is between 20 and 220. Within such range, the color difference of the early warning coating is obviously distinguished from the separator body.

In some embodiments, the step of providing the separator roll specifically comprises: providing a plurality of separator bodies. Each of the plurality of separator bodies is formed with the head end and the tail end along a length direction thereof; enabling the head end and the tail end of every two of the plurality of separator bodies to be connected; and winding the plurality of separator bodies along the length direction to form the separator roll.

In this way, the early warning coating is used to warn the position of the tail end of the separator body where the early warning coating is located in advance, when the early warning coating is detected, it is indicated that the current position is spaced from the tail end of the separator body by the first preset length, in this way, the position of the tail end of the separator body is predicted in advance and corresponding adjustments can be made, so as to avoid the case where insufficient length of the tail end leads to a broken band during the high-speed winding process of the electrode assembly, or the case where a non-separator body in connection with the tail end is directly wound inside the electrode assembly, thereby ensuring the quality of the electrode assembly.

In some embodiments, after the step of providing the plurality of separator bodies, the method further comprises: providing the early warning coating on each of the plurality of separator bodies, so as to avoid the case where insufficient length of the tail end leads to a broken band during the high-speed winding process of the electrode assembly.

In some embodiments, after the step of providing the plurality of separator bodies, the method further comprises: providing the early warning coating on each of the plurality of separator bodies, so as to avoid the case where insufficient length of the tail end leads to a broken band during the high-speed winding process of the electrode assembly.

In some embodiments, the step of enabling the head end and the tail end of every two of the plurality of separator bodies to be connected specifically comprises: connecting the head end and tail end of every two of the plurality of separator bodies by a connector.

By providing the connector, a plurality of separator bodies can be wound on a single separator roll at the same time. In such condition, through the configuration of the early warning coating, the specific position of the connector can be acquired, so as to avoid the connector between adjacent separator bodies from being wound into the electrode assembly during the high-speed winding of the electrode assembly, which would otherwise cause an unqualified electrode assembly.

In some embodiments, the step of connecting the head end and tail end of every two of the plurality of separator bodies by the connector further comprises:
providing a joint adhesive formed by one of a polyethylene terephthalate, an epoxy resin, a polyurethane, an unsaturated polyester resin, a phenolic resin, a polyacrylic resin, a polyvinyl chloride resin, a polysulfide rubber, a silicone rubber, a polyurethane rubber, a neoprene rubber, and butyl rubber, or any mixture thereof, to adhesively connect the head end and tail end of every two adjacent separator bodies.

When it is necessary to wind a plurality of separator bodies on the separator roll, by attaching a joint adhesive at a joint position of two adjacent separator body, the plurality of separator bodies are connected and wound to form the separator roll. When the separator body needs to be peeled off from the separator roll, the early warning coating is used to warn the position of the joint adhesive in advance, prompting the downstream device to cut the tail end of the separator body, so as to avoid the joint adhesive from being wound into the inside of the electrode assembly along with the separator body, which would otherwise affect the production quality of the electrode assembly.

In some embodiments, the step of providing the early warning coating on the separator body further comprises: extending application of the early warning coating along the length direction of the separator body, and extending application of the early warning coating along the width direction of the separator body.

In this way, the early warning coating has sufficient dimensions in the width direction and/or the length direction of the separator body, so as to ensure that the early warning coating can be detected by an external apparatus.

In some embodiments, the step of extending the application of the early warning coating along the length direction of the separator body further comprises: applying the early warning coating with a second preset length along the length direction of the separator body, in which a range of the second preset length is between 1 mm and 2000 mm.

In this way, it is ensured that the second preset length of the early warning coating can have a sufficient detection distance when the early warning coating passes through the external detection apparatus, so as to ensure the early warning coating can be effectively detected.

In some embodiments, the step of extending the application of the early warning coating along the length direction of the separator body further comprise: applying the early warning coating with a second preset length along the length direction of the separator body, in which a range of the second preset length is between 10 mm and 50 mm.

In some embodiments, the step of extending the application of the early warning coating along the width direction of the separator body further comprises: applying the early warning coating along the width direction of the separator body such that a distance between each of two side edges of the early warning coating and a corresponding edge of two side edges of the separator body is in a range of between 1 mm and 2000 mm, which ensures that the early warning coating can be effectively detected by the external detection apparatus, and the mutual influence between the early warning coating and the tab can also be avoided.

In some embodiments, before the step of providing the early warning coating on the separator body, the method further comprises:
providing the early warning coating, in which, the early warning coating is made of one of a rubber, a polyacrylic acid, a polymethacrylic acid, a polymethyl acrylate, a polyethyl acrylate, a pure acrylic emulsion, a polyacrylic acid-styrene copolymer, a polyvinylpyrrolidone, a styrene-butadiene rubber, an epoxy resin, a neopentyl glycol diacrylate, a sodium polyacrylate series, a fluorine-containing polyolefin, or any mixture thereof.

The Fluorine-containing polyolefin adhesive can be an derivative including but not limited to a polyvinylidene fluoride (PVDF), a vinylidene fluoride copolymer, or a modified derivative thereof (for example, modified carboxylic acid, acrylic acid, acrylonitrile, and the like).

In this way, an early warning coating can be formed rapidly on the surface of the separator body. In some exemplary embodiments, a 5# adhesive made of a natural rubber can also be selected, and such adhesive has faster solidification time and higher adhesion strength.

According to another aspect of the present application, there is also provided a manufacturing equipment for manufacturing the electrode assembly as described in any of the above embodiments. The manufacturing equipment comprises a winding apparatus and a detection apparatus. The winding apparatus is configured for stacking and winding the cathode plate of the cathode plate roll, the separator body of the separator roll, and the anode plate of the anode plate roll. The detection apparatus is located on a convey path of the separator body of the separator roll and configured for detecting whether the separator body is provided with the early warning coating.

In a third aspect, the present application also provides a battery cell. The battery cell comprises a casing and an electrode assembly accommodated in the casing and manufactured by the method for manufacturing the electrode assembly in any of the above embodiments.

In a fourth aspect, the present application also provides a battery, comprising the battery cell described in the above embodiments.

In a fifth aspect, the present application also provides an electrical device, comprising the battery described in the above embodiments, and the battery is configured for providing electric energy.

The details of one or more embodiments of the present application are explained in the accompanying drawings and the description below. Other features, objects, and advantages of the present application will be apparent from the description, drawings, and claims.

### BRIEF DESCRIPTION OF THE DRAWINGS

In order to illustrate the technical scheme of the embodiment of the present application more clearly, the accompanying drawings that need to be used in the embodiments of the present application will be briefly introduced below, obviously, the description hereinbelow only involves some embodiments of the present application, for those skilled in the art, other drawings can be obtained according to the present drawings without paying creative work:
FIG. 1 is the structural schematic diagram of a vehicle provided by some embodiments of the present application;
FIG. 2 is the structural schematic diagram of a battery provided by some embodiments of the present application;
FIG. 3 is an exploded schematic diagram of a battery cell in an embodiment of the present application;
FIG. 4 is a perspective structural schematic diagram of a separator roll in an embodiment of the present application;
FIG. 5 is a perspective structural schematic diagram of a separator roll in an embodiment of the present application;
FIG. 6 is a plan structural schematic diagram of a separator body and an early warning coating in the separator roll in an embodiment of the present application;
FIG. 7 is a plan structural schematic diagram of a separator body and an early warning coating in the separator roll in an embodiment of the present application;
FIG. 8 is a plan structural schematic diagram of a separator body and an early warning coating in the separator roll in an embodiment of the present application;
FIG. 9 is a plan structural schematic diagram of a separator body and an early warning coating in the separator roll in an embodiment of the present application;
FIG. 10 is a plan structural schematic diagram of a separator body and an early warning coating in the separator roll in an embodiment of the present application;
FIG. 11 is a schematic flow chart of a manufacturing method of a separator roll in an embodiment of the present application;
FIG. 12 is a schematic flow chart of a manufacturing method of a separator roll in an embodiment of the present application;
FIG. 13 is a schematic flow chart of a manufacturing method of a separator roll in an embodiment of the present application;
FIG. 14 is a schematic flow chart of a manufacturing method of a separator roll in an embodiment of the present application;
FIG. 15 is a schematic flow chart of a manufacturing method of a separator roll in an embodiment of the present application;
FIG. 16 is a schematic flow chart of a manufacturing method of a separator roll in an embodiment of the present application;
FIG. 17 is a schematic flow chart of a manufacturing method of a separator roll in an embodiment of the present application;
FIG. 18 is a schematic flow chart of a manufacturing method of a separator roll in an embodiment of the present application;
FIG. 19 is a schematic flow chart of a manufacturing method of a separator roll in an embodiment of the present application;
FIG. 20 is a schematic flow chart of a manufacturing method of an electrode assembly in an embodiment of the present application;
FIG. 21 is a schematic flow chart of a manufacturing method of an electrode assembly in an embodiment of the present application;
FIG. 22 is a schematic flow chart of a manufacturing method of an electrode assembly in an embodiment of the present application;
FIG. 23 is a schematic flow chart of a manufacturing method of an electrode assembly in an embodiment of the present application;
FIG. 24 is a schematic flow chart of a manufacturing method of an electrode assembly in an embodiment of the present application;
FIG. 25 is a schematic flow chart of a manufacturing method of an electrode assembly in an embodiment of the present application; and
FIG. 26 is a schematic flowchart of a manufacturing method of an electrode assembly in an embodiment of the present application.

1000: Vehicle; 100: Battery; 200: Controller; 300: Motor; 10: Cabinet; 11: First part; 12: Second part; 20: Battery cell; 21: End cover; 211: Electrode terminal; 22: Casing; 23: Electrode assembly; 2000: Separator roll; 231: Separator body; a: Head end; b: Tail end; 232: Early warning coating; 3000: Anode plate roll; 233: Anode plate; 4000: Cathode plate roll; 234: Cathode plate; 5000: Winding apparatus; 6000: Detection apparatus; 7000: Cutter; 30: Connecting piece; 40: Support member; L1: First preset length; L2: Second preset length; F1: Length direction (winding direction); and F2: Width direction.

### DETAILED DESCRIPTION OF THE EMBODIMENTS

Embodiments of the technical solutions of the present application will be described in detail below in conjunction with the accompanying drawings. The following embodiments are only used to illustrate the technical solution of the present application more clearly, and therefore are only exemplary, rather than limiting the protection scope of the present application.

Unless otherwise defined, all technical and scientific terms used herein have the same meaning as commonly understood by those skilled in the art of the application; the terms used herein are only for the purpose of describing specific embodiments, and are not intended to limit the present application; the terms "comprising" and "having" and any variations thereof in the specification and claims of the present application and the description of the drawings are intended to cover a non-exclusive inclusion.

In the description of the embodiments of the present application, the technical terms "first" and "second" are only used to distinguish different objects, and should not be understood as indicating or implying relative importance or implicitly indicating the number, specific order, or primary-secondary relationship of the indicated technical parameters. In the description of the embodiments of the present application, "plurality" means two or more, unless otherwise specifically defined.

Reference to "embodiment" herein means that a specific parameter, structure, or feature described in connection with the embodiments may be included in at least one embodiment of the present application. The occurrences of this phrase in various places in the specification are not necessarily all referring to the same embodiment, nor are separate or alternative embodiments which are mutually exclusive of other embodiments. It is understood explicitly and implicitly by those skilled in the art that the embodiments described herein can be combined with other embodiments.

In the description of the embodiment of the present application, the term "and/or" is only an association relationship describing associated objects, which means that three kinds of relationships can be included, for example, A and/or B may mean the following conditions: A exists alone, both A and B exist at the same time, and B exists alone. In addition, the character "/" in the present application. generally indicates that the associated objects have an "or" relationship.

In the description of the embodiments of the present application., the term "multiple" refers to more than two (including two), similarly, "multiple groups" refers to two or more groups (including two groups), and "multiple pieces" refers to is more than two pieces (including two pieces).

In the description of the embodiments of the present application, the technical terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate the orientation or positional relationship based on the drawing's orientation or positional relationship is only for the convenience of describing the embodiments of the present application and simplifying the description, and does not indicate or imply that the device or element referred to must have a specific orientation, be constructed, or operated in such a specific orientation, and therefore cannot be understood as an limitation to embodiments of the present application.

In the description of the embodiments of the present application., unless otherwise clearly specified and limited, technical terms such as "installation", "connection", "attachment", "fixation", and the like should be interpreted in a broad sense, for example, it can be a fixed connection, or a detachable connection, or integration as a while; it can also be a mechanical connection, or an electrical connection; it can be a direct connection, or an indirect connection through a medium, and it can be the internal communication of two components or the interaction relationship between two components. Those skilled in the art can understand the specific meanings of the above terms in embodiments of the present application according to specific situations.

At present, from the perspective of the development of the market situation, the application of battery packs is becoming more and more extensive. Battery packs are not only used in energy storage power systems, such as hydraulic, thermal, wind, and solar power plants, but also widely used in electric vehicles, such as electric bicycles, electric motorcycles, electric vehicles, as well as military equipment, aerospace, and other fields. With the continuous expansion of application fields of the battery pack, the market demand of the battery pack is also constantly expanding.

The applicant has noticed that in the manufacturing process of the electrode assembly of the battery, the separator body, as an important insulating part, is generally wound to form a separator roll for storage after the completion of the manufacturing, so as to facilitate the use thereof for subsequent processes. The separator roll is generally wound with at least one separator body. When a plurality of separator bodies are wound end-to-end, insulating connectors are provided between adjacent separator bodies to connect all the separator bodies as a whole. In the subsequent manufacturing process of the electrode assembly, the separator is gradually peeled off from the separator roll, and are stacked with the anode plate and the cathode plate for participating a winding process, whereby obtaining the final electrode assembly.

However, in the process of peeling the separator body from the separator roll and winding, it is impossible to judge a position of a tail end of each separator body, that is, it is difficult to judge the position of the connector between two adjacent separator bodies or judge a remaining winding length of the separator body, resulting in the unqualified phenomenon that the insulated connector is involved in the internal structure of the electrode assembly during the winding process or the occurrence of broken band caused by the insufficient length of the tail end of the separator body during winding, which would further affect the production quality and winding efficiency of the electrode assembly.

In order to improve the production quality of the electrode assembly, the applicant has found through research that a corresponding structure can be provided to detect the position of the tail end of the separator, so as to give an early warning of the position of the tail end of the separator or the connector.

Based on the above considerations, in order to avoid the impact on the production quality and winding efficiency of the electrode assembly product due that the position of the tail end of the separator winding in the separator winding process is unable to be judged, the applicant has developed a separator through in-depth research. The separator roll comprises a separator body and an early warning coating 232 that is provided on the separator body. The separator body has a head end and tail end along the length direction, and is wound along the length direction to form the separator roll. The early warning coating 232 is configured to be spaced by a first present length from the tail end of the separator body where the early waning coating is located. In such case, the early warning coating 232 is used to warn the position of the tail end of the separator body where the early warning coating 232 is located in advance, when the early warning coating 232 is detected, it is indicated that the current position is spaced from the tail end b of the separator body 231 by the first preset length L1, in this way, the position of the tail end b of the separator body 231 is predicted in advance and corresponding adjustments can be made, so as to avoid the case where insufficient length of the tail end b leads to a broken band during the high-speed winding process of the electrode assembly 23, or the case where the connector at the tail end is directly wound inside the electrode assembly 23, thereby ensuring the production quality and winding efficiency of the electrode assembly.

The batteries disclosed in the embodiments of the present application can be used, but not limited to, in electrical devices such as vehicles, ships or aircrafts. The battery disclosed in the present application can be used to form the power supply system of the electrical device. The mounting body involved in the present application is a structure used for mounting batteries in electrical devices.

Embodiments of the present application provides an electrical device that uses battery as the power source, and the electrical device can be, but not limited to, a mobile phone, a tablet, a notebook computer, an electric toy, an electric tool, a battery car, an electric car, a ship, a spacecraft, and the like. The electric toy may include a fixed or mobile electric toy, such as a game console, an electric car toy, an electric boat toy, an electric airplane toy, and the like; and the spacecraft may include an airplane, a rocket, a space shuttle, a spaceship, and the like.

In the following embodiments, for convenience of description, an electrical device according to an embodiment of the present application is taken as an example for description.

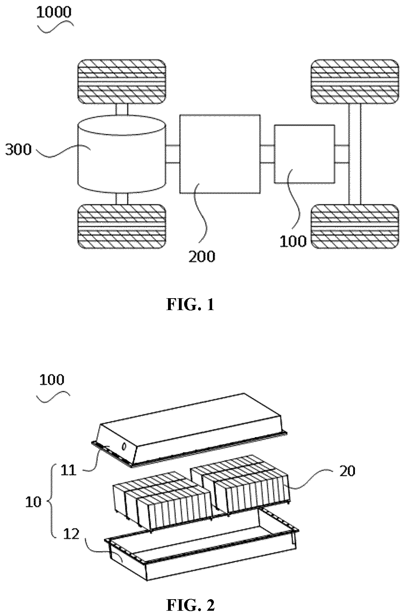

Referring to FIG. 1, which is a schematic structural diagram of a vehicle 1000 provided by some embodiments of the present application. The vehicle 1000 can be a fuel vehicle, a gas vehicle, or a new energy vehicle, and the new energy vehicle can be a pure electric vehicle, a hybrid vehicle, or an extended-range vehicle. The inside of the vehicle 1000 is provided with a battery 100, and the battery 100 may be provided at the bottom, head, or tail of the vehicle 1000. The battery 100 can be used for power supply of the vehicle 1000, for example, the battery 100 can be used as an operating power source of the vehicle 1000. The vehicle 1000 may further include a control device 200 and a motor 300, and the control device 200 is used to control the battery 100 to provide power to the motor 300, for example, for starting, navigating, and running the vehicle 1000.

In some embodiments of the present application, the battery 100 can not only be used as the operating power source for the vehicle 1000, but can also be used as a driving power source for the vehicle 1000, replacing or partially replacing a fuel oil or a natural gas to provide driving power for the vehicle 1000.

Referring to FIG. 2, which is an exploded view of a battery 100 provided by some embodiments of the present application. The battery 100 includes a cabinet 10 and battery cells 20 accommodated in the cabinet 10. The cabinet 10 is used to provide an accommodating space for the battery cells 20, and the cabinet 10 may adopt various structures. In some embodiments, the cabinet 10 may include a first part 11 and a second part 12, the first part 11 and the second part 12 cover each other, and the first part 11 and the second part 12 jointly define an accommodation space for accommodating the battery cells 20. The second part 12 can be a hollow structure with one side open, the first part 11 can be a plate-shaped structure, and the first part 11 covers the opening side of the second part 12, so that the first part 11 and the second part 12 jointly define the accommodation space. Or alternatively, both the first part 11 and the second part 12 can be hollow structures with one side opening, and the opening side of the first part 11 is covered by the opening side of the second part 12. It can be understood that the cabinet 10 formed by the first part 11 and the second part 12 can be in various shapes, such as a cylinder, a cuboid, and the like.

In the battery 100, the number of the battery cells 20 may be a plural. The plurality of battery cells 20 may be connected in series, in parallel or in a combined connection manner. The combined connection manner means that the plurality of battery cells 20 are connected in series as well as in parallel. A plurality of battery cells 20 can be directly connected in series, in parallel, or in a combined connection manner, then the plurality of battery cells 20 as a whole are accommodated in the cabinet 10. It can be understood that the battery 100 can also be as follows: a plurality of battery cells 20 are firstly connected in series or in parallel or in a combined connection manner to form a battery module, and then a plurality of the battery modules are connected in series or in parallel or in a combination connection manner to form a whole, which is accommodated in the cabinet 10. The battery 100 may also include other structures, for example, the battery 100 may also include a bus component for realizing electrical connection between multiple battery cells 20.

Each battery cell 20 may be a secondary battery or a primary battery; or may also be a lithium battery, a lithium-sulfur battery, a sodium-ion battery or a magnesium-ion battery, but is not limited thereto. The battery cell 20 may be in the form of a cylinder, a flat body, a cuboid, or other shapes.

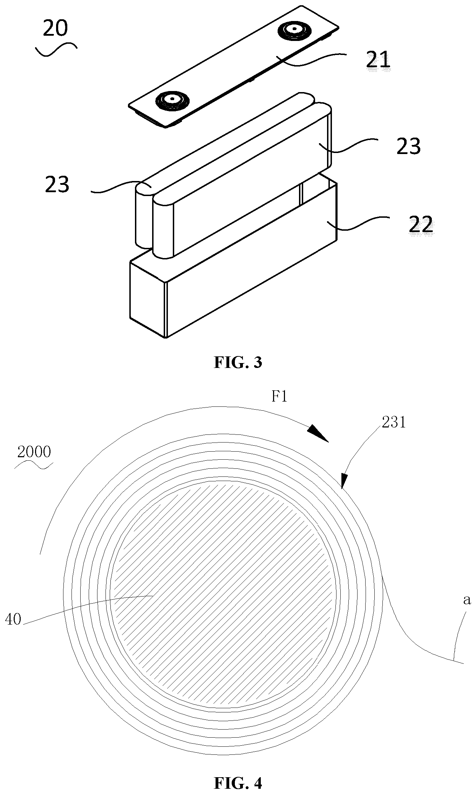

Referring to FIG. 3, which is a schematic diagram of an exploded structure of a battery cell 20 provided in some embodiments of the present application. The battery cell 20 refers to a smallest unit constituting a battery. As shown in FIG. 3, the battery cell 20 includes an end cover 21, a casing 22, an electrode assembly 23, and other functional components.

The end cover 21 refers to a component that covers the opening of the casing 22 to isolate the internal environment of the battery cell 20 from the external environment. Without limitation, the shape of the end cover 21 can be adapted to the shape of the casing 22 to fit the casing 22. Optionally, the end cover 21 can be made of a material (such as aluminum alloy) with a certain hardness and strength, so that the end cover 21 is not easily deformed when being squeezed and collided, so that the battery cell 20 can have a higher structural strength and safety performance can also be improved. Functional components such as electrode terminals 211 may be provided on the end cover 21. The electrode terminal 211 can be used for electrical connection with the electrode assembly 23 for outputting or inputting electric energy of the battery cell 20. In some embodiments, the end cover 21 may also be provided with a pressure relief mechanism 24 for releasing the internal pressure when the internal pressure or temperature of the battery cell 20 reaches a threshold value. The material of the end cover 21 can also be various, for example, copper, iron, aluminum, stainless steel, aluminum alloy, plastic, and the like, which is not particularly limited in this embodiment of the present application. In some embodiments, an insulator can be provided inside the end cover 21, and the insulator can be used to isolate the electrical connection components in the casing 22 from the end cover 21 to reduce the risk of short circuit. Exemplarily, the insulator may be a plastic, a rubber, or the like.

The casing 22 is a component used to cooperate with the end cover 21 to form an internal environment of the battery cell 20, and the formed internal environment can be used to accommodate the electrode assembly 23, an electrolyte, and other components. The casing 22 and the end cover 21 can be independent components, and an opening can be defined in the casing 22, and the internal environment of the battery cell 20 can be formed by making the end cover 21 cover the opening of the casing. Without limitation, the end cover 21 and the casing 22 can also be integrated. Specifically, the end cover 21 and the casing 22 can form a common connection surface before other components are inserted into the casing. When the inside of the casing 22 needs to be encapsulated, the casing 22 is covered by the end cover 21. The casing 22 can be in various shapes and sizes, such as cuboid, cylinder, hexagonal prism, and the like. Specifically, the shape of the casing 22 can be determined according to the specific shape and size of the electrode assembly 23. The casing 22 can be made of various materials, such as copper, iron, aluminum, stainless steel, aluminum alloy, plastic, and the like, which is not particularly limited in embodiments of the present application.

The electrode assembly 23 is a component in the battery cell 100 where the electrochemical reaction occurs. One or more electrode assemblies 23 may be contained in the casing 22. The electrode assembly 23 is mainly formed by winding or stacking the anode plate and the cathode plate, and usually a separator is provided between the anode plate and the cathode plate. The parts of the anode plate and the cathode plate with active material constitute the main body of the electrode assembly, and the parts of the anode plate and the cathode plate without active material respectively constitute tabs. The cathode tab and the anode tab can be located at one end of the main body together or at two ends of the main body respectively. During the charging and discharging process of the battery, the cathode active material and the anode active material react with the electrolyte, and the tabs are connected to the electrode terminals to form a current loop.

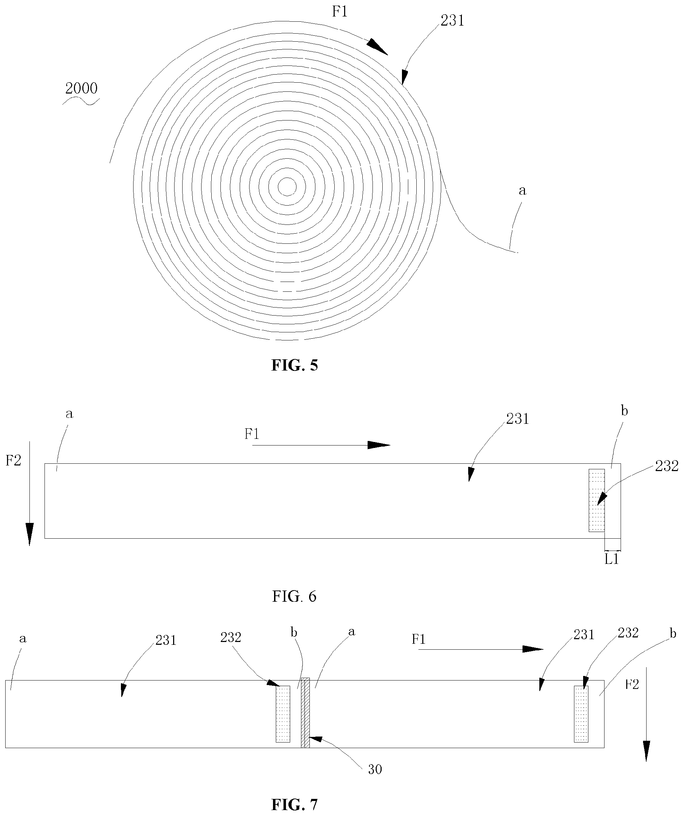

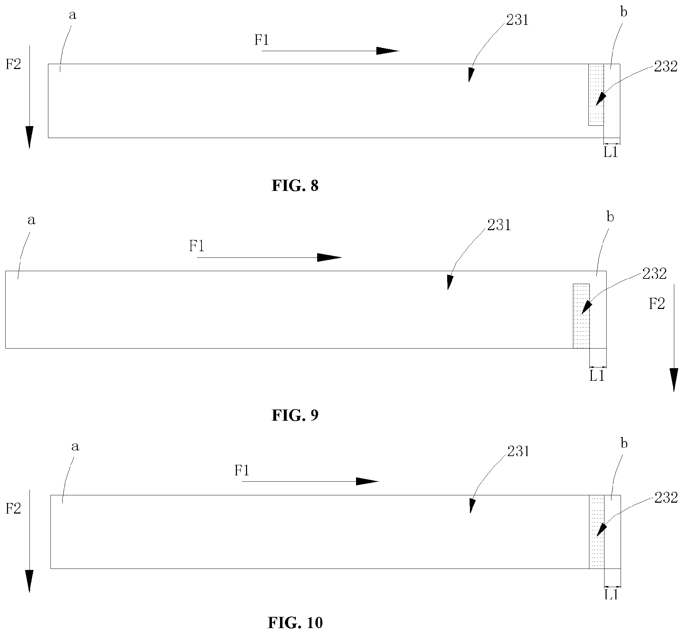

According to some embodiments of the present application, referring to FIGS. 4-5, and further referring to FIGS. 6-8, a separator roll 2000 is provided by the present application and includes a separator body 231 and an early warning coating 232. The separator body 231 has a head end a and a tail end b along a length direction F1 and is configured to be able to be wound along the length direction F1. The early warning coating 232 is arranged on the separator body 231 and is configured to be spaced from the tail end b by a first preset length L1.

The separator body 231 refers to a separator having isolation functions and arranged between the anode plate and the cathode plate in the electrode assembly 23 of the battery 100. The separator body 231 can be made of a PP, a PE, or a PI material. The separator body 231 has electronic insulation to ensure the mechanical isolation of the anode plate and the cathode plate, and the separator body 231 has a certain pore size and porosity to ensure low resistance and high ion conductivity.

The length direction F1 refers to a direction indicated by an arrow F1 in FIGS. 6-8. Two opposite ends of the separator body 231 in the length direction F1 form the head end a and the tail end b. When the separator body 231 is wound along the length direction F 1, a separator roll 2000 is formed as shown in FIGS. 4- 5, and the winding direction F1 is converted from the length direction F 1. After the winding is completed, the head end a of the separator body 231 is located at a relatively outer position, and the tail end b of the separator body 231 is located at a relatively inner position. When the separator body 231 is peeled off from the separator roll 2000. The head end a is firstly pulled and peeled off from the separator roll 2000, and then the tail end b is peeled off from the separator roll 2000, so that a separator body 231 is completely peeled off.

The early warning coating 232 is a structure configured for early warning of the tail end b of a separator body 231 where the early warning coating 232 is located. The early warning coating 232 is located on the separator body 231 and can be recognized by an external detection apparatus and can be formed on the surface of the separator body 231 by means of coating or adhering. When recognizing the early warning coating 232, the detection apparatus will send to a downstream device a signal indicating that a current position is spaced from the tail end b of the separator body 231 by a distance of the first preset length L1, so as to prompt the downstream device to perform operations such as cutting, so as to warn the position of the tail end b of the separator body 231 in advance.

The first preset length L1 is a length marked as L1 in FIG. 6 to FIG. 8, a size of the first preset length L1 can be set according to the lengths of the cathode plate and the anode plate wound together with the separator body 231, and is not limited in the present application. The control of the size of the first preset length L1 enables the downstream device to have sufficient time to operate, so as to avoid the case where insufficient length of the tail end b leads to a broken band during the high-speed winding process of the electrode assembly 23, or the case where a non-separator body 231 in connection with the tail end b is directly wound inside the electrode assembly 23.

In this way, the early warning coating 232 is used to warn the position of the tail end of the separator body where the early warning coating 232 is located in advance, when the early warning coating 232 is detected, it is indicated that the current position is spaced from the tail end b of the separator body 231 by the first preset length L1, in this way, the position of the tail end b of the separator body 231 is predicted in advance and corresponding adjustments can be made, so as to avoid the case where insufficient length of the tail end b leads to a broken band during the high-speed winding process of the electrode assembly 23, or the case where a non-separator body 231 in connection with the tail end b is directly wound inside the electrode assembly 23, thereby ensuring the quality of the electrode assembly 23.

Understandably, the early warning coating 232 can be wound inside the electrode assembly 23, which will not damage the structure of the electrode assembly 23, nor will participate in the electrochemical reaction of the battery 100.

In some embodiments, the separator roll 2000 includes a plurality of separator bodies 231, and every two adjacent separator bodies 231 are connected end-to-end by a connector 30.

The connector 30 is a structure used to connect a tail end b and a head end a of two adjacent separator bodies 231. The original intention of the arrangement of the connector is to facilitate the connection of the plurality of separator bodies 231 to form an separator body 231 for storage or subsequent use. The connector is not part of the electrode assembly 23 and should not be wound into the electrode assembly 23. Conventionally, the connector 30 is an insulating material, and can connect the tail end b and the head end a of two adjacent separator bodies 231 by means of fixed connection, adhesive connection, and the like.

In addition, a support member 40 can also be provided, and a plurality of separator bodies 231 are connected end to end in sequence and wound to the periphery of the support member 40, thereby forming a cylindrical separator roll 2000. The support member 40 may also not be provided, and more separator bodies 231 can be accommodated in the same separator roll 2000 by stacking and winding a plurality of separator bodies 231.

Thus, by providing the connector 30, a plurality of separator bodies 231 can be wound on a single separator roll 2000 at the same time. In such condition, through the configuration of the early warning coating 232, the specific position of the connector 30 can be acquired, so as to avoid the connector 30 between adjacent separator bodies 231 from being wound into the electrode assembly 23 during the high-speed winding of the electrode assembly 23, which would otherwise cause an unqualified electrode assembly 23.

In some embodiments, for example, the connector 30 comprises a joint adhesive which is formed by one of a polyethylene terephthalate, an epoxy resin, a polyurethane, an unsaturated polyester resin, a phenolic resin, a polyacrylic resin, a polyvinyl chloride resin, a polysulfide rubber, a silicone rubber, a polyurethane rubber, a neoprene rubber, and butyl rubber, or any mixture thereof, and can be used to adhesively connect the head end a and tail end b of two adjacent separator bodies 231.

The polyethylene terephthalate is a common resin material, and the joint adhesive formed therefrom has excellent physical and mechanical properties, friction resistance, dimensional stability, and electric insulation, and thus can be used to connect adjacent separator bodies 231.

When it is necessary to wind a plurality of separator bodies 231 on the separator roll 2000, by attaching a joint adhesive at a joint position of two adjacent separator body 231, the plurality of separator bodies 231 are connected and wound to form the separator roll 2000. When the separator body 231 needs to be peeled off from the separator roll 2000, the early warning coating 232 is used to warn the position of the joint adhesive in advance, prompting the downstream device to cut the tail end b of the separator body 231, so as to avoid the joint adhesive from being wound into the inside of the electrode assembly 23 along with the separator body 231, which would otherwise affect the production quality of the electrode assembly.

In some embodiments, each separator body 231 is provided with an early warning coating 232.

The early warning coating 232 is used to warn the position of the tail end b of the separator body 231 where the early warning coating 232 is located, so as to avoid the occurrence of broken band due to insufficient length of the tail end b of the separator body 231 during the high-speed winding process of the electrode assembly 23. It is ensured that the position of the tail end b of each separator body 231 in the separator roll 2000 is warned, so that the tail end of each separator body 231 is effectively warned during the peeling process of the separator body 231.

In some embodiments, the early warning coating 232 is coated on the surface of the separator body 231, and the early warning coating 232 extends along the length direction F1 and/or the width direction F2 of the separator body 231.

The width direction F2 of separator body 231 is a direction shown in F2 as indicated by the arrow in FIGS 6-8. The length direction F1 of the separator body 231 is perpendicular to the width direction F2 of the separator body 231, in this way, the early warning coating 232 has sufficient dimensions in the width direction F2 and/or the length direction F1 of the separator body 231, so as to ensure that the early warning coating 232 can be detected by external apparatus.

In some embodiments, the early warning coating 232 has a second preset length L2 in the length direction F1 of the separator body 231, and the range of the second preset length L2 is between 1 millimeter (mm) and 1000 mm.

Understandably, the separator roll 2000 is formed by winding along the length direction F1 of the separator body 231, and the separation of the separator body 231 from the separator roll 2000 is also along the length direction F1 of the separator body 231. The external detection apparatus is arranged on the peeling path of the separator body 231 to ensure that the second preset length L2 of the early warning coating 232 can have a sufficient detection distance when the early warning coating 232 passes through the external detection apparatus, so as to ensure the early warning coating 232 can be effectively detected.

In some embodiments, the range of the second preset length L2 is between 10 mm and 50 mm.

In this way, by controlling the range of the second preset length L2 to be between 10 mm and 50 mm, it is ensured that the early warning coating 232 can be effectively detected by an external detection apparatus, and the second preset length L2 is avoided from being too long.

In some exemplary embodiments, the early warning coating 232 may extend to two sides of the separator body 231 in the width direction F2 along the width direction F2 of the separator body 231, or may not extend to the two sides of the early warning coating 232 but instead be arranged in the middle of the separator body 231.

In some embodiments, in the width direction F2 of the separator body 231, at least one side edge of the early warning coating 232 coincides with the edge of the separator body 231.

In such embodiments, the following three cases are included: in the width direction F2 of separator body 231, a left side edge of early warning coating 232 coincides with an edge of separator body 231; a right side edge of early warning coating 232 coincides with an edge of the separator body 231; the edges on both sides of the early warning coating 232 coincide with the edges on two sides of the separator body 231.

In the width direction F2 of separator body 231, when the edges on both sides of the early warning coating 232 coincide with the edges on two sides of the separator body 231, it only requires the early warning coating to be arranged along the width direction F2 of the separator body 231, the manufacturing process is simple, so that the early warning coating 232 can be recognized by the detection apparatus.

In some embodiments, the state identification of the tabs is also included in the manufacturing process of the electrode assembly, specifically, whether the tabs are folded over can be identified by a folding sensor.

When on the width direction F2 of separator body 231, when the left side edge of early warning coating 232 coincides with the edge of separator body 231 or the right side edge of early warning coating 232 coincides with the edge of separator body 231, in such condition, the side of the early warning coating 232 that does not coincide with the edge of the separator body 231 can be distinguished from the position of the tab on the same side, preventing misjudgment when the early warning coating 232 passes through a sensor configured for detecting the tab, that is, preventing the phenomenon that the early warning coating 232 is sensed by the sensor and misjudged as a tab.

It can be understood that, the above embodiments are described as examples in the state where the separator roll is placed vertically along the winding direction, and the separator roll can be placed in other ways during practical application.

In some embodiments, in the width direction F2 of the separator body 231, the edges on two sides of the early warning coating 232 do not overlap with the edges on two sides of the separator body 231.

It can be understood that the early warning coating 232 runs through the entire separator body 231 may cause the tab folding sensor, which is configured to sense the tabs on two sides of the separator body 231 in the width direction F2, to recognize the early warning coating 232 and misjudge the early warning coating 232 as a tab during the winding process. Therefore, the early warning coating 232 is located in the middle of the separator body 231 and does not extend to the two ends of the separator body 231 in the width direction F2, so as to be distinguished from the tabs located at the two ends of the separator body 231 in the width direction F2. In this way, the early warning coating 232 is prevented from being misjudged when passing through the sensor configured for identifying the tab, that is, it is avoided the phenomenon that the sensor detects and misjudges the early warning coating 232 as a tab, thereby reducing false warning during the production process of the electrode assembly and improving production efficiency.

In some embodiments, in the width direction F2 of the separator body 231, the distance between each of two side edges of the early warning coating 232 and a corresponding edge of the two side edges of the separator body 231 is in the range of between 1 mm and 1000 mm.

The distance between each of two side edges of the early warning coating 232 and the corresponding edge of the two side edges of the separator body 231 can be equal, in such condition the early warning coating 232 is positioned at the middle of separator body 231 in the width direction F2. Moreover, the distance between each of two side edges of the early warning coating 232 and the corresponding edge of the two side edges of the separator body 231 can also be different, in such condition, the early warning coating 232 is arranged to be closer to one side of the separator body 231 in the width direction F2.

In some embodiments, in the width direction F2 of the separator body 231, the distance between each of two side edges of the early warning coating 232 and the corresponding edge of the two side edges of the separator body 231 is in the range of between 5 mm and 30 mm.

In the range of between 5 mm and 30 mm, it can be ensured that the early warning coating 232 can be effectively detected by the external detection apparatus, and the mutual influence between the early warning coating 232 and the tab can also be avoided.

The distance between each of two side edges of the early warning coating 232 and the corresponding edge of the two side edges of the separator body 231 will also be determined according to the size of separator body 231 in the width direction F2. Understandably, the distance between each of two side edges of the early warning coating 232 and the corresponding edge of the two side edges of the separator body 231 must be smaller than the size of the separator body 231 in its own width direction F2.

The early warning coating 232 is formed by a pigment, an adhesive material, or a mixture coating, arranged on the surface of separator body 231, and has the characteristics that are obviously different from separator body 231, such as the hue, the lightness, the chroma, the glossiness, and the color difference, and other parameters, which enables the early warning coating 232 to be accurately and easily detected by an external detection apparatus.

The early warning coating 232 is directly coated on the surface of the separator body 231, so that the early warning coating 232 that can be detected by an external detection apparatus can be simply and rapidly formed, and does not cause damage to the surface of the separator body 231. Grooves or protrusions can also be formed on the surface of the separator body 231. In some exemplary embodiments, the early warning coating 232 can be formed on a wall of the groove or a surface of the protrusion to ensure that when the separator body 231 is peeled off, the early warning coating 232 can be directly and rapidly identified by the external detection apparatus.

In some embodiments, the early warning coating 232 comprises one of a rubber, a polyacrylic acid, a polymethacrylic acid, a polymethyl acrylate, a polyethyl acrylate, a pure acrylic emulsion, a polyacrylic acid-styrene copolymer, a polyvinylpyrrolidone, a styrene-butadiene rubber, an epoxy resin, a neopentyl glycol diacrylate, a sodium polyacrylate series, a fluorine-containing polyolefin, or any mixture thereof.

The Fluorine-containing polyolefin adhesive can be an derivative including but not limited to a polyvinylidene fluoride (PVDF), a vinylidene fluoride copolymer, or a modified derivative thereof (for example, modified carboxylic acid, acrylic acid, acrylonitrile, and the like).

By applying onto the surface of the separator body 231, the early warning coating 232 can be rapidly formed. In some exemplary embodiments, a 5# adhesive made of a natural rubber can also be selected, and such adhesive has faster solidification time and higher adhesion strength.

In some embodiments, the color of the separator body 231 is different from the color of the early warning coating 232.

The color of chromatic system has three basic characteristics: hue, purity (also referred to chroma or saturation), lightness, which, in chromatics, are also called the three elements of color or the three attributes of color. The color with a saturation of 0 is an achromatic system. For example, by applying an early warning coating 232 that has a color difference with the separator body 231 on the separator body 231, a separator body 231 and an early warning coating 232 with different colors are formed, so that the early warning coating 232 plays an early warning role.

In some embodiments, the color difference of the separator body 231 is different from the color difference of the early warning coating 232.

A RGB value of the color difference of the separator body 231 and the color difference of the early warning coating 232 ranges between 1 and 225, to ensure that the color difference of the early warning coating 232 can be clearly distinguished from that of the separator body 231, thereby being recognized to produce an early warning effect.

In a specific embodiment, the surface of the separator body 231 can be controlled to be white, and the color of the early warning coating 232 is set to enable an RGB value of the color difference to have a lower limit of (1,176,241) and an upper limit of (25,38,213).

In other embodiments, the surface of the separator body 231 can also be set to any color, and the surface of the early warning coating 232 can be set to a color different from the surface of the separator body 231, which is not limited in the present application.

In some embodiments, the RGB value of the color difference between the separator body 231 and the early warning coating 232 ranges between 20 and 220.

Within this range, it is ensured that the color difference of the early warning coating 232 can be clearly distinguished from the separator body 231.

In some embodiments, the shape of the early warning coating 232 is a rectangle, a circle, a semicircle, a trapezoid, or a triangle.

The rectangular, circular, semicircular, trapezoidal, and triangular shapes can all form the extension on at least two directions, thereby ensuring that the early warning coating 232 has the second preset length L2 on separator body 231 in the length direction F 1, and extends to two sides of the separator body 231 along the width direction F2.

Thus, the shape of the early warning coating 232 is variable, and the processing operation of the early warning coating 232 is simple, and the early warning function can be realized.

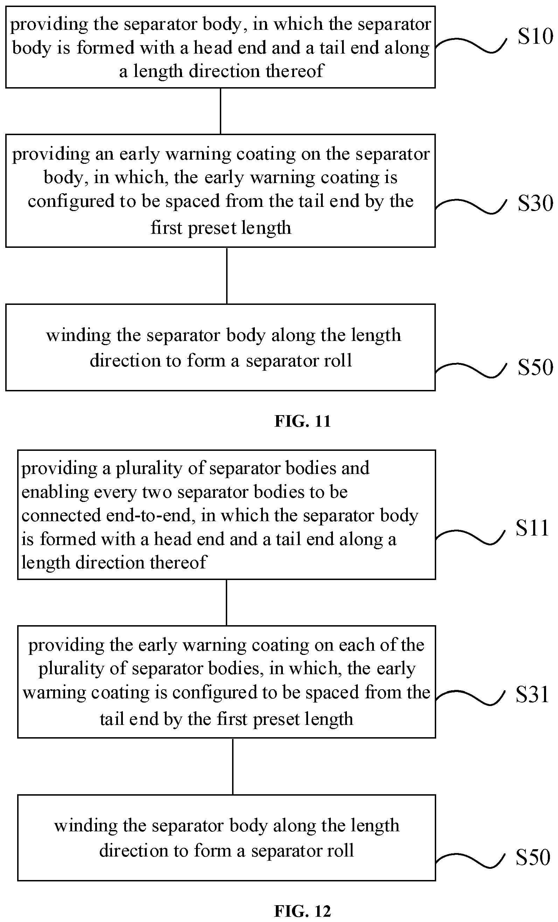

According to another aspect of the present application, it is also provided a preparation method of the separator roll, referring to FIG. 11, the preparation method specifically comprises:
step S10, providing the separator body 231, in which the separator body 231 is formed with a head end a and a tail end b along a length direction F 1 thereof;
step S30, providing an early warning coating 232 on the separator body 231, in which, the early warning coating 232 is configured to be spaced from the tail end b by the first preset length L1; and
step S50, winding the separator body 231 along the length direction F1 to form a separator roll 2000.

About the nomenclature explanation involved in above and following method, all explained in above content, thus not be repeated hereinbelow.

In this way, the early warning coating 232 is used to warn the position of the tail end of the separator body where the early warning coating 232 is located in advance, when the early warning coating 232 is detected, it is indicated that the current position is spaced from the tail end b of the separator body 231 by the first preset length L1, in this way, the position of the tail end b of the separator body 231 is predicted in advance and corresponding adjustments can be made, so as to avoid the case where insufficient length of the tail end b leads to a broken band during the high-speed winding process of the electrode assembly 23, or the case where a non-separator body 231 in connection with the tail end b is directly wound inside the electrode assembly 23, thereby ensuring the quality of the electrode assembly 23.

In some embodiments, referring to FIG. 12, the step of providing the separator body 231 specifically includes:
step S11, providing a plurality of separator bodies 231 and enabling every two separator bodies 231 to be connected end -to-end.

In this way, a plurality of separator bodies 231 can be wound on one separator roll 2000 at the same time. The continuous winding and continuous peeling of the separator body 231 are realized, thereby improving the production efficiency.

In some embodiments, referring to FIG. 12, the step of providing the early warning coating 232 on the separator body 231 specifically includes:
step S31, providing the early warning coating 232 on each of the plurality of separator bodies 231.

The early warning coating 232 is used to warn the position of the tail end b of the separator body 231 where the early warning coating 232 is located, so as to avoid the occurrence of broken band due to insufficient length of the tail end b of the separator body 231 during the high-speed winding process of the electrode assembly 23. It is ensured that the position of the tail end b of each separator body 231 in the separator roll 2000 is warned, so that the tail end of each separator body 231 is effectively warned during the peeling process of the separator body 231.

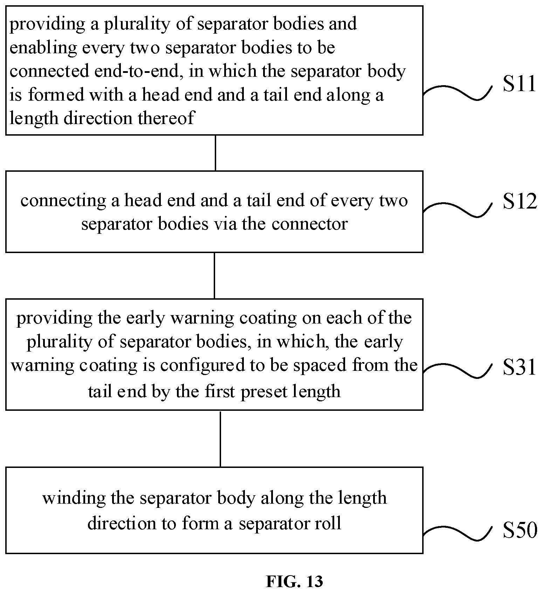

In some embodiments, referring to FIG. 13, the step of enabling every two separator bodies 231 to be connected end -to-end further includes:
step S12, connecting a head end a and a tail end b of every two separator bodies 231 via the connector 30.

By providing the connector 30, a plurality of separator bodies 231 can be wound on a single separator roll 2000 at the same time. In such condition, through the configuration of the early warning coating 232, the specific position of the connector 30 can be acquired, so as to avoid the connector 30 between adjacent separator bodies 231 from being wound into the electrode assembly 23 during the high-speed winding of the electrode assembly 23, which would otherwise cause an unqualified electrode assembly 23.

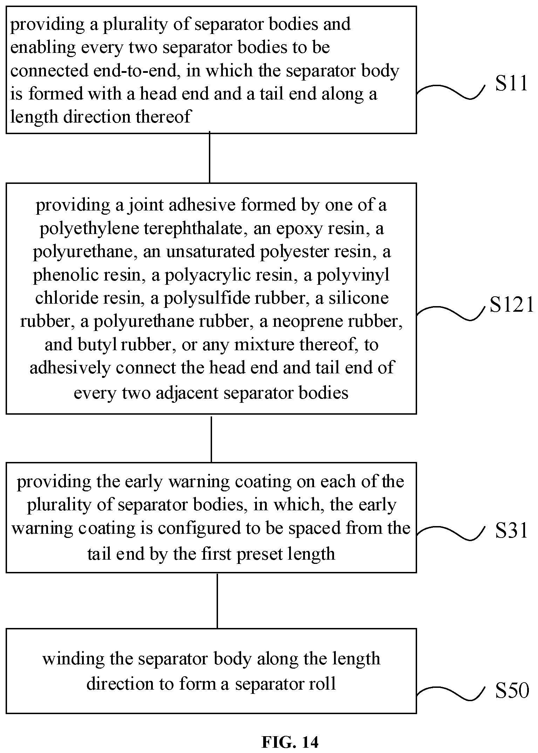

In some embodiments, referring to FIG. 14, the step of connecting the head end a and the tail end b of every two separator bodies 231 by the connector 30 specifically includes:
step S121, providing a joint adhesive formed by one of a polyethylene terephthalate, an epoxy resin, a polyurethane, an unsaturated polyester resin, a phenolic resin, a polyacrylic resin, a polyvinyl chloride resin, a polysulfide rubber, a silicone rubber, a polyurethane rubber, a neoprene rubber, and butyl rubber, or any mixture thereof, to adhesively connect the head end a and tail end b of every two adjacent separator bodies 231.

When it is necessary to wind a plurality of separator bodies 231 on the separator roll 2000, by attaching a joint adhesive at a joint position of two adjacent separator body 231, the plurality of separator bodies 231 are connected and wound to form the separator roll 2000. When the separator body 231 needs to be peeled off from the separator roll 2000, the early warning coating 232 is used to warn the position of the joint adhesive in advance, prompting the operator to carry out corresponding operations on the joint adhesive, so as to avoid the joint adhesive from being wound into the inside of the electrode assembly 23 along with the separator body 231, which would otherwise affect the production quality of the electrode assembly.

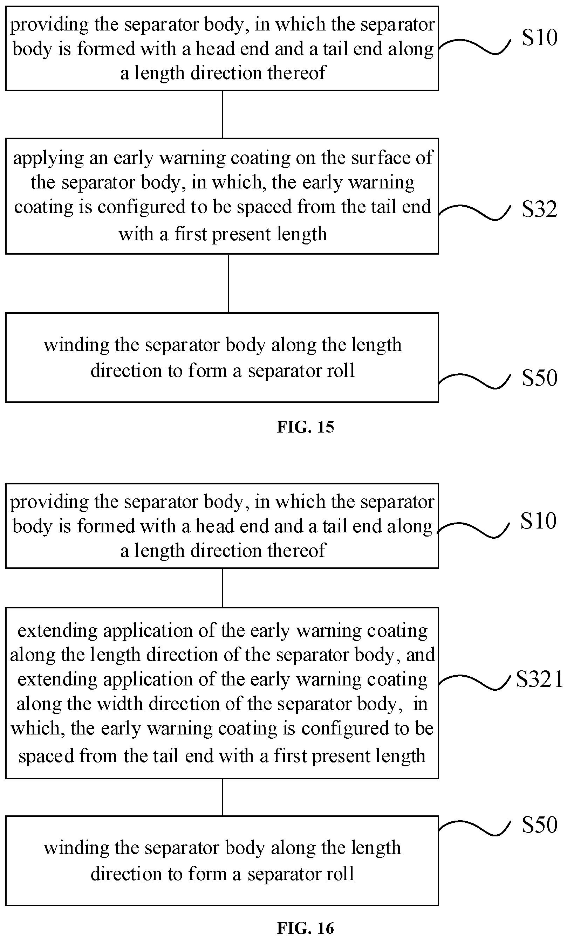

In some embodiments, referring to FIG. 15, the step of providing the early warning coating 232 on the separator body 231 further includes:
step S32, applying an early warning coating 232 on the surface of the separator body 231.

In this way, the early warning coating 232 can be simply and rapidly formed, and can be detected by an external detection apparatus without causing damage to the surface of the separator body 231. Grooves or protrusions can also be formed on the surface of the separator body 231. In some exemplary embodiments, the early warning coating 232 can be formed on a wall of the groove or a surface of the protrusion to ensure that when the separator body 231 is peeled off, the early warning coating 232 can be directly and rapidly identified by the external detection apparatus.

In some embodiments, referring to FIG. 16, the step of providing the early warning coating 232 on the separator body 231 further includes:
step S321, extending application of the early warning coating 232 along the length direction F1 of the separator body 231, and extending application of the early warning coating 232 along the width direction F2 of the separator body 231.

In this way, the width direction F2 and/or the length direction F1 of 231 have sufficient dimensions to ensure that the early warning coating 232 can be detected by external apparatus.

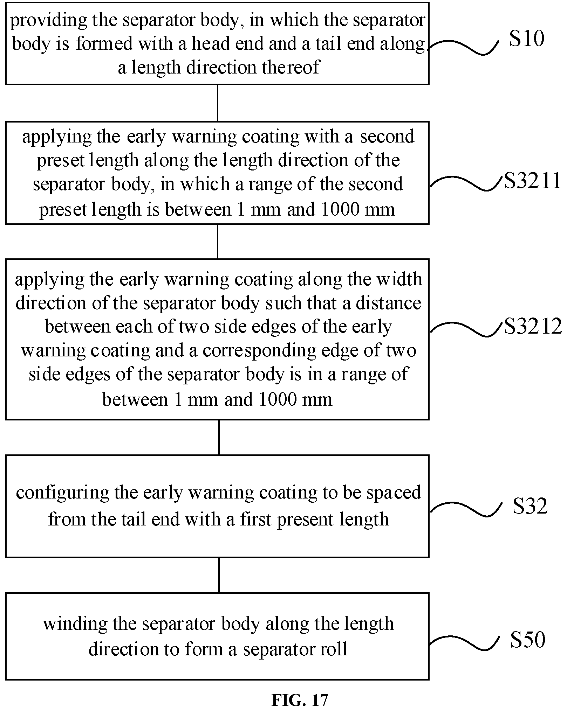

In some embodiments, referring to FIG. 17, the step of extending the application of the early warning coating 232 along the length direction F1 of the separator body 231 further includes:
step S3211, applying the early warning coating 232 with a second preset length L2 along the length direction F1 of the separator body 231, in which a range of the second preset length L2 is between 1 mm and 1000 mm.

Understandably, the separator roll 2000 is formed by winding along the length direction F1 of the separator body 231, and the separation of the separator body 231 from the separator roll 2000 is also along the length direction F1 of the separator body 231. The external detection apparatus is arranged on the peeling path of the separator body 231 to ensure that the second preset length L2 of the early warning coating 232 can have a sufficient detection distance when the early warning coating 232 passes through the external detection apparatus, so as to ensure the early warning coating 232 can be effectively detected.

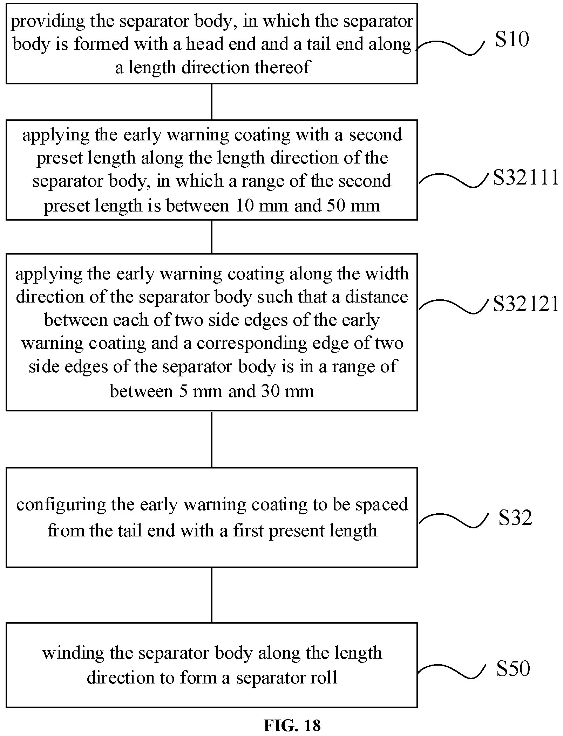

In some embodiments, referring to FIG. 18, the step of extending the application of the early warning coating 232 along the length direction F1 of the separator body 231 further includes:
step S32111, applying the early warning coating 232 with a second preset length L2 along the length direction F1 of the separator body 231, in which a range of the second preset length L2 is between 10 mm and 50 mm.

Thus, The control of the range of the second preset length L2 to between 10 mm and 50 mm can have a sufficient detection distance when the early warning coating 232 passes through the external detection apparatus, so as to ensure the early warning coating 232 can be effectively detected.

In some embodiments, referring to FIG. 17, the step of extending the application of the early warning coating 232 along the width direction F2 of the separator body 231 further includes:
step S3212, applying the early warning coating 232 along the width direction F2 of the separator body 231 such that a distance between each of two side edges of the early warning coating 232 and a corresponding edge of two side edges of the separator body 231 is in a range of between 1 mm and 1000 mm.

The distance between each of two side edges of the early warning coating 232 and the corresponding edge of the two side edges of the separator body 231 can be equal, in such condition the early warning coating 232 is positioned at the middle of separator body 231 in the width direction F2. Moreover, the distance between each of two side edges of the early warning coating 232 and the corresponding edge of the two side edges of the separator body 231 can also be different, in such condition, the early warning coating 232 is arranged to be closer to one side of the separator body 231 in the width direction F2.

In some embodiments, referring to FIG. 18, the step of extending the application of the early warning coating 232 along the width direction F2 of the separator body 231 further includes:
step S32121, applying the early warning coating 232 along the width direction F2 of the separator body 231 such that a distance between each of two side edges of the early warning coating 232 and a corresponding edge of two side edges of the separator body 231 is in a range of between 5 mm and 30 mm.

In the range of between 5 mm and 30 mm, it can be ensured that the early warning coating 232 can be effectively detected by the external detection apparatus, and the mutual influence between the early warning coating 232 and the tab can also be avoided.

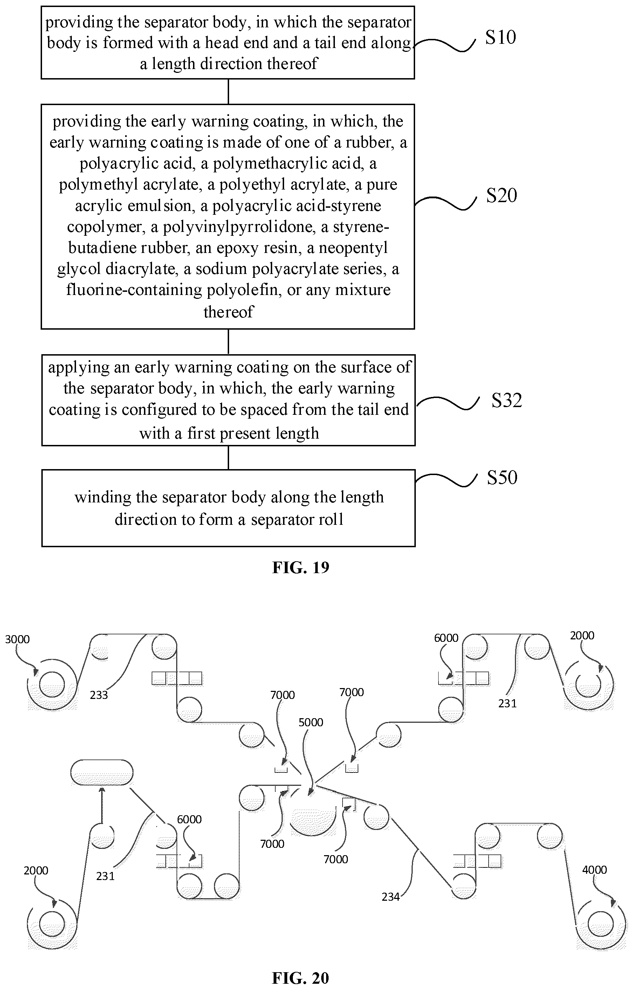

In some embodiments, referring to FIG. 19, before the step of providing the early warning coating 232 on the separator body 231, the method further includes:
step S20, providing the early warning coating 232, in which, the early warning coating 232 is made of one of a rubber, a polyacrylic acid, a polymethacrylic acid, a polymethyl acrylate, a polyethyl acrylate, a pure acrylic emulsion, a polyacrylic acid-styrene copolymer, a polyvinylpyrrolidone, a styrene-butadiene rubber, an epoxy resin, a neopentyl glycol diacrylate, a sodium polyacrylate series, a fluorine-containing polyolefin, or any mixture thereof.

The Fluorine-containing polyolefin adhesive can be an derivative including but not limited to a polyvinylidene fluoride (PVDF), a vinylidene fluoride copolymer, or a modified derivative thereof (for example, modified carboxylic acid, acrylic acid, acrylonitrile, and the like).

By applying onto the surface of the separator body 231, the early warning coating 232 can be rapidly formed. In some exemplary embodiments, a 5# adhesive made of a natural rubber can also be selected, and such adhesive has faster solidification time and higher adhesion strength.

In some embodiments, the color of the separator body 231 is different from the color of the early warning coating 232.

The color of chromatic system has three basic characteristics: hue, purity (also referred to chroma or saturation), lightness, which, in chromatics, are also called the three elements of color or the three attributes of color. The color with a saturation of 0 is an achromatic system. For example, by applying an early warning coating 232 that has a color difference with the separator body 231 on the separator body 231, a separator body 231 and an early warning coating 232 with different colors are formed, so that the early warning coating 232 plays an early warning role.

In some embodiments, the color difference of the separator body 231 is different from the color difference of the early warning coating 232.

A RGB value range of the color difference of the separator body 231 and the color difference of the early warning coating 232 is between 1 and 225, to ensure that the color difference of the early warning coating 232 can be clearly distinguished from that of the separator body 231, thereby being recognized to produce an early warning effect.

In a specific embodiment, the surface of the separator body 231 can be controlled to be white, and the color of the early warning coating 232 is set to enable an RGB value of the color difference to have a lower limit of (1,176,241) and an upper limit of (25,38,213).

In other embodiments, the surface of the separator body 231 can also be set to any color, and the surface of the early warning coating 232 can be set to a color different from the surface of the separator body 231, which is not limited in the present application.

In some embodiments, the RGB value of the color difference between the separator body 231 and the early warning coating 232 ranges between 20 and 220.

Within this range, it is ensured that the color difference of the early warning coating 232 can be clearly distinguished from the separator body 231.

The method of providing the early warning coating 232 on the separator body 231 to early warn the position of the tail end b in the above embodiments is also applicable to the cathode plate and the anode plate, thus will not be repeated in the present application.

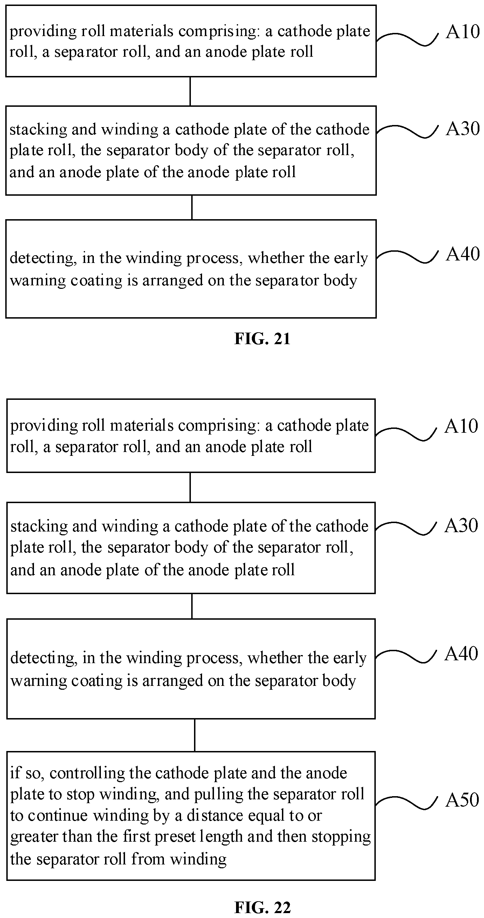

According to some embodiments of the present application, referring to FIG. 20, the present application further provides a manufacturing method of an electrode assembly, referring to FIG. 21, specifically comprises the following steps:
step A10, providing roll materials comprising: a cathode plate roll 4000, a separator roll 2000 according to any of the above embodiments, and an anode plate roll 3000, in which, the separator roll 2000 includes a separator body 231 and an early warning coating 232 arranged on the separator body 231; the separator body 231 has a head end a and a tail end b at two opposite ends along a winding direction F1; and the early warning coating 232 is configured to be spaced from the tail end b by a first preset length L1;
step A30, stacking and winding a cathode plate 234 of the cathode plate roll 4000, the separator body 231 of the separator roll 2000, and an anode plate 233 of the anode plate roll 3000; and
step A40, detecting, in the winding process, whether the early warning coating 232 is arranged on the separator body 231.

Specifically, a winding apparatus 5000 is provided, so that the cathode plate 234 of the cathode plate roll 4000, the separator body 231 of the separator roll 2000, and the anode plate 233 of the anode plate roll 3000 are stacked and wound onto the winding apparatus 5000, and are prepared into the electrode assembly 23 a winding process.

The winding apparatus 5000 has a traction structure and a winding structure. The traction structure can connect the head end a of the cathode plate roll 4000, the head end a of the separator roll 2000 and the head end a of the anode plate roll 3000 with the winding structure. Then, the winding structure can be controlled to rotate at a high speed according to the settings in a circumferential direction, and the cathode plate 234, the separator body 231, and the anode plate 233 are peeled off from the cathode plate roll 4000, the separator roll 2000, and the anode plate roll 3000, respectively, so that the electrode assembly 23 is formed on the winding structure by winding.

The manufacturing method of the electrode assembly includes the preparation method of the separator roll according to the above embodiments, and has all the functions and effects thereof, which will not be repeated herein in the present application.

The winding direction F1 refers to a direction in which the separator body 231 is wound along the length direction F1 thereof to form the separator roll 2000. That is, the length direction F1 after being wound is the winding direction F1.

The cathode plate roll 4000 and the anode plate roll 3000 refer to material structures that are similar to the separator roll 2000 and that are prepared by stacking and winding at least one cathode plate 234 and at least one anode plate 233, respectively, and are wound into roller shapes after the cathode plate 234 and the anode plate 233 are respectively produced from the production line, so as to facilitate subsequent fabrication of the electrode assembly 23.

The detection apparatus 6000 refers to an apparatus that is used to detect the early warning coating 232 on the separator body 231. The early warning coating 232 is configured to be spaced from the tail end b of the separator body 231 L1 with a first preset length L1. When the early warning coating 232 is detected, it indicates the current position is spaced from the tail end b of the separator body 231 by the first preset length L 1. In such condition, the high-speed rotation state of the winding mechanism is changed, or other operations are performed.

In this way, the early warning coating 232 is detected by the detection assembly, so that the tail end b of the separator body 231 is early warned in advance, so as to avoid the case where insufficient length of the tail end b leads to a broken band during the high-speed winding process of the electrode assembly 23, or the case where a non-separator body 231 in connection with the tail end b is directly wound inside the electrode assembly 23, thereby ensuring the quality of the electrode assembly 23.

In some embodiments, referring to FIG. 22, optionally, after the step of detecting whether the early warning coating 232 is arranged on the separator body 231, the method further comprises:
Step A50, if so, controlling the cathode plate 234 and the anode plate 233 to stop winding, and pulling the separator roll 2000 to continue winding by a distance equal to or greater than the first preset length L1 and then stopping the separator roll 2000 from winding.

The cathode plate 234 and the anode plate 233 do not participate in the winding, and the separator body 231 is individually rolled, after being wound by a length of greater than or equal to the set first preset length L 1, the winding of the separator body 231 is then stopped, in such condition the separator, the tail end b of the separator body 231 on the separator roll 2000 leaves the separator roll 2000. In such condition, if there is still a separator body 231 on the separator roll 2000, the connector 30 between the two separator bodies 231 has been peeled off from the separator roll 2000 and has not been wound between the cathode plate 234 and the anode plate 233, thereby avoiding the phenomenon that the connector 30 is wound inside the electrode assembly 23.

In such condition, if there is no other separator body 231 on the separator roll 2000, then the cathode plate 234 and the anode plate 233 do not participate in the winding in advance, and the separator body 231 is wound individually, so as to avoid the case where insufficient length of the tail end b, which cannot be wound to form a single electrode assembly 23, leads to a broken band and causing the electrode assembly 23 scrapped, thereby improving the yield.

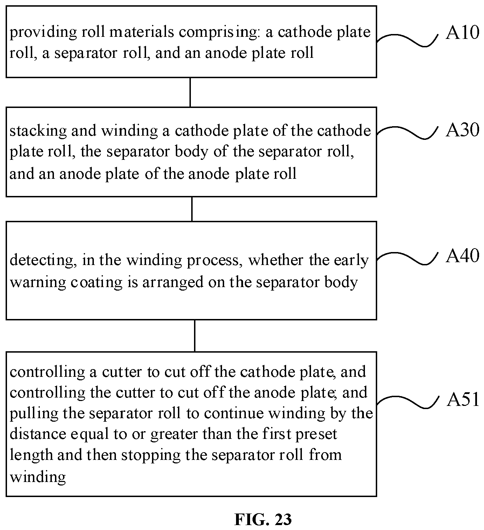

In some embodiments, optionally, referring to FIG. 23, the step of controlling the cathode plate 234 and the anode plate 233 to stop winding specifically includes:
Step A51, controlling a cutter 7000 to cut off the cathode plate 234, and controlling the cutter 7000 to cut off the anode plate 233.

The cutter 7000 is a blade, a rolling roller or other types of structures used to provide a cutting effect, and when being used to cut the cathode plate 234, the anode plate 233 or the separator body 231, no damage will be caused on the structure itself.

The cutter 7000 can be arranged on a position near the winding structure of winding apparatus 5000, to cut the anode plate 233 and cathode plate 234 that have been wound onto the winding mechanism off from the anode plate roll 3000 and the cathode plate, respectively, such that the winding of the cathode plate 234 and the anode plate 233 is stopped in advance.

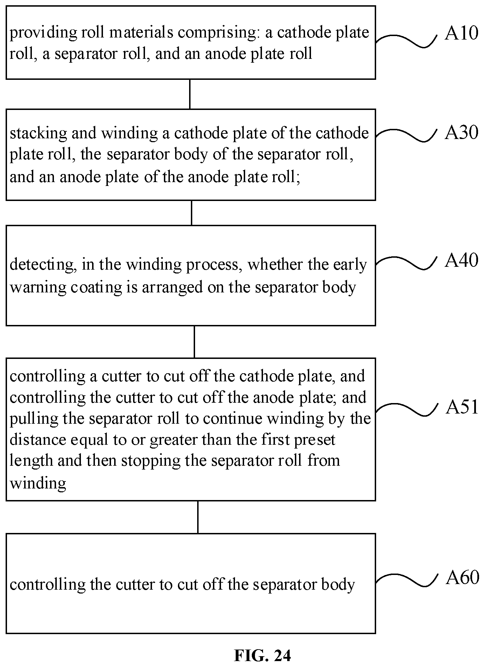

In some embodiments, optionally, referring to FIG. 24, after the step of pulling the separator roll 2000 to continue winding by the distance equal to or greater than the first preset length L1 and then stopping the separator roll 2000 from winding, the method further includes:
Step A60, controlling the cutter 7000 to cut off the separator body 231.

After the separator body 231 is individually wound by a certain distance, the connector 30 arranged between two adjacent separator bodies 231 is peeled off from the separator roll 2000 and is not wound between the cathode plate 234 and the anode plate 233, in such condition, the cutter 7000 is controlled to cut off the separator body 231, and the connector 30 is also cut off from the separator roll 2000, thereby preventing the connector 30 from affecting a next winding of the electrode assembly 23.

Furthermore, in such condition, the anode plate 233, the cathode plate 234, and the separator are all cut off from the roll materials. After a certain length of the separator body 231, which is finally and individually wound, is cut off, an electrode assembly 23 is finally formed and then packaged.

In some embodiments, optionally, for each time the electrode assembly 23 is wound, a finally and individually wound distance of the separator body 231 is smaller than a distance of the anode plate 233 or the cathode plate 234 that is wound to form the electrode assembly 23, so as to ensure that the connector 30 on the tail end b of the separator body 231 can be cut off by the cutter 7000 and leave the separator roll 2000, so as not to affect the pulling and the winding of the separator body 231 for a next time the electrode assembly 23 is wound.

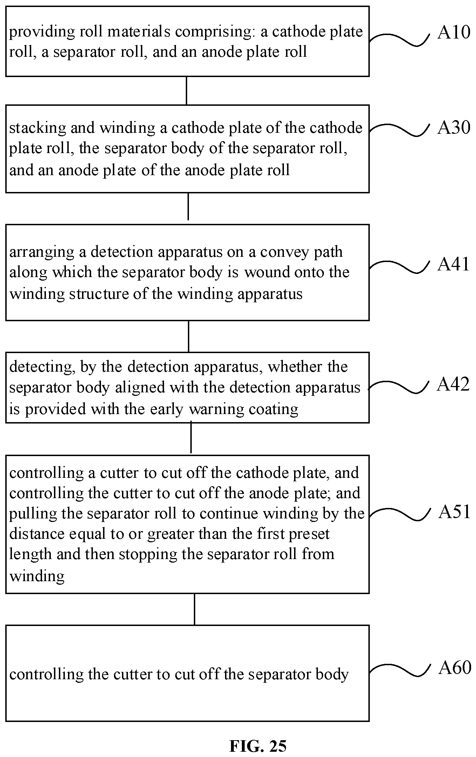

In some embodiments, optionally, referring to FIG. 25, the step of detecting whether the early warning coating 232 is arranged on the separator body 231 specifically includes:
Step A41, arranging a detection apparatus 6000 on a convey path along which the separator body 231 is wound onto the winding structure of the winding apparatus 5000;
Step A42, detecting, by the detection apparatus 6000, whether the separator body 231 aligned with the detection apparatus 6000 is provided with the early warning coating 232.

The convey path is a traction path, along which the traction structure drives the separator body 231 to be wound onto the winding structure, and all the separator bodies 231 will be conveyed through this convey path and be wound onto the winding structure to form the final electrode assemblies 23.

The detection apparatus 6000 is a sensor structure that converts an optical signal into an electrical signal. When the early warning coating 232 arrives a position align with the detection apparatus 6000, the sensor can sense a detection part and sends out an early warning signal, and depending on whether the warning signal is sent out, the cathode plate 234 and the anode plate 233 are controlled to stop winding. Optionally, the detection apparatus 6000 may be a color sensor, an infrared sensor, and the like.

Thus, by arranging the detection apparatus 6000, and enabling the detection apparatus 6000 to fit with the early warning coating 232, the early warning coating 232 can be recognized.

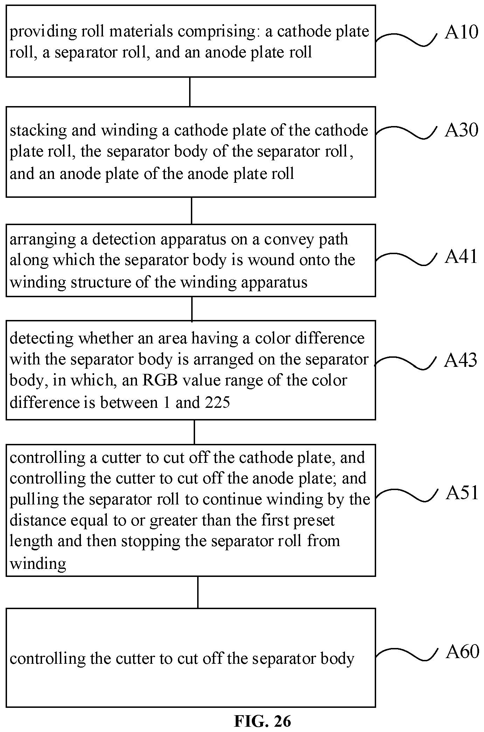

In some embodiments, optionally, referring to FIG. 26, the step of detecting, by the detection apparatus 6000, whether the separator body 231 aligned with the detection apparatus 6000 is provided with the early warning coating 23 specifically includes:
Step A43, detecting whether an area having a color difference with the separator body 231 is arranged on the separator body 231, in which, an RGB value range of the color difference is between 1 and 225.

If there is an area having a color difference with the separator body 231, then this area is an early warning coating 232; if there is no area having a color difference with the separator body 231, then it is indicated that no early warning coating 232 is arranged on the separator body 231. The RGB value of the color difference of the separator body 231 and the color difference of the early warning coating 232 ranges between 1 and 225, to ensure that the color difference of the early warning coating 232 can be clearly distinguished from that of the separator body 231, thereby being recognized to produce an early warning effect.

In some embodiments, the RGB value of the color difference between the separator body 231 and the early warning coating 232 ranges between 20 and 220.

Within this range, it is ensured that the color difference of the early warning coating 232 can be clearly distinguished from the separator body 231.

In a specific embodiment, the surface of the separator body 231 can be controlled to be white, and the color of the early warning coating 232 is set to enable an RGB value of the color difference to have a lower limit of (1,176,241) and an upper limit of (25,38,213).

In other embodiments, the surface of the separator body 231 can also be set to any color, and the surface of the early warning coating 232 can be set to a color different from the surface of the separator body 231, which is not limited in the present application.

In some embodiments, in addition to color difference, other parameters, such as the hue, the lightness, the chroma, the glossiness, and the color difference, of the surfaces of the early warning coating 232 and the separator body 231 can be different, which enables the early warning coating 232 to be accurately and easily detected by an external detection apparatus.

The method of detecting the early warning coating 232 on the separator body 231 by providing the detection apparatus 6000 in the above embodiments is also applicable to the cathode plate and the anode plate, thus will not be repeated in the present application.

According to another aspect of the present application, there is also provided a manufacturing equipment for manufacturing the electrode assembly 23 as described in any of the above embodiments, the manufacturing equipment includes a winding apparatus 5000 and a detection apparatus 6000. The winding apparatus 5000 is used for stacking and winding the cathode plate 234 of the cathode plate roll 4000, the separator body 231 of the separator roll 2000, and the anode plate 233 of the anode plate roll 3000, in which, the detection apparatus 6000 is located on a convey path of the separator body 231 of the separator roll 20000 and the detection apparatus 6000 is configured for detecting whether the separator body 231 is provided with the early warning coating 232.

According to some embodiments of the present application, referring to FIG. 5 to FIG. 7, the application provides a separator roll 2000, a method for manufacturing the separator roll, and a manufacturing method of an electrode assembly. A plurality of separator bodies 231 connected end-to-end are wound onto the separator roll 2000, adjacent separator bodies 231 are bonded by a joint adhesive. Each of plurality of separator bodies 231 is applied with an early warning coating 232, such that during the process of successively peeling the separator bodies 231 off from the separator roll 2000 and winding to form the electrode assemblies 23, the early warning coating 232 on each separator body 231 to early warn the position of the joint adhesive at the tail end b, so as to avoid the case where the joint adhesive is wound inside the electrode assembly 23 due to the position of the joint adhesive is unable to be judged. It can be understood that the last separator body 231 can avoid the broken band caused by the insufficient length of the tail end b when the last separator body 231 is peeled off and involved in the electrode assembly 23 by warning the position of its tail end b in advance.

According to another aspect of the present application, a battery cell 20 is also provided. The battery cell includes a casing 22 and an electrode assembly 23 accommodated in the casing 22 and manufactured by the method for manufacturing the electrode assembly in any of the above embodiments.

According to another aspect of the present application, a battery 100 is also provided, including the battery cells 20 described in the above embodiments.

According to another aspect of the present application, there is also provided an electrical device, including the battery 100 described in the above embodiment, and the battery 100 is used to provide electric energy.

Different technical features of the above-described embodiments can be combined arbitrarily, for making description concise, all possible combinations of different technical features in the above embodiments are not all described, however, as long as the combinations of these technical features does not lead to contradiction, all such combinations should be deemed to be within the scope of this specification.

The above embodiments only involve several implementation modes of the present application, and the description thereof is relatively specific and detailed, but should not be construed as limiting the scope of the patent application. It should be noted that those skilled in the art can make several modifications and improvements without departing from the concept of the present application, and such modifications and improvements all belong to the protection scope of the present application. Therefore, the protection scope of the patent application should be based on the appended claims.

## Claims

1. A manufacturing method of an electrode assembly, comprising steps of:
providing roll materials comprising: a cathode plate roll, a separator roll, and an anode plate roll, wherein, the separator roll comprises a separator body and an early warning coating arranged on the separator body; the separator body has a head end and a tail end at two opposite ends along a winding direction; and the early warning coating is configured to be spaced from the tail end by a first preset length;
stacking and winding a cathode plate of the cathode plate roll, the separator body of the separator roll, and an anode plate of the anode plate roll; and
detecting, in the winding process, whether the early warning coating is arranged on the separator body.

2. The manufacturing method of the electrode assembly according to claim 1, wherein after the step of detecting whether the early warning coating is arranged on the separator body, the method further comprises:
controlling, if so, the cathode plate and the anode plate to stop winding, and pulling the separator roll to continue winding by a distance equal to or greater than the first preset length and then stopping the separator roll from winding.

3. The manufacturing method of the electrode assembly according to claim 2, wherein the step of controlling the cathode plate and the anode plate to stop winding specifically comprises:
controlling a cutter to cut off the cathode plate; and
controlling the cutter to cut off the anode plate.

4. The manufacturing method of the electrode assembly according to any one of claims 2-3, wherein after the step of pulling the separator roll to continue winding by the distance equal to or greater than the first preset length and then stopping the separator roll from winding, the method further comprises:
controlling the cutter to cut off the separator body.

5. The manufacturing method of the electrode assembly according to any one of claims 1-4, wherein the step of detecting whether the early warning coating is arranged on the separator body specifically comprises:
arranging a detection apparatus on a convey path of the separator body; and
detecting, by the detection apparatus, whether the separator body aligned with the detection apparatus is provided with the early warning coating.

6. The manufacturing method of the electrode assembly according to claim 5, wherein the step of detecting, by the detection apparatus, whether the separator body aligned with the detection apparatus is provided with the early warning coating specifically comprises:
detecting whether an area having a color difference with the separator body is arranged on the separator body;
wherein an RGB value of a range of the color difference is between 1 and 225.

7. The manufacturing method of the electrode assembly according to claim 5, wherein the step of detecting, by the detection apparatus, whether the separator body aligned with the detection apparatus is provided with the early warning coating specifically comprises:
detecting whether an area having a color difference with the separator body is arranged on the separator body;
wherein an RGB value of a range of the color difference is between 20 and 220.

8. The manufacturing method of the electrode assembly according to any one of claims 1-7, wherein the step of providing the separator roll specifically comprises:
providing a plurality of separator bodies, wherein each of the plurality of separator bodies is formed with the head end and the tail end along a length direction thereof;
enabling the head end and the tail end of every two of the plurality of separator bodies to be connected; and
winding the plurality of separator bodies along the length direction to form the separator roll.

9. The manufacturing method of the electrode assembly according to claim 8, wherein after the step of providing the plurality of separator bodies, the method further comprises:
providing the early warning coating on each of the plurality of separator bodies.

10. The manufacturing method of the electrode assembly according to any one of claims 8-9, wherein the step of enabling the head end and the tail end of every two of the plurality of separator bodies to be connected specifically comprises:
connecting the head end and tail end of every two of the plurality of separator bodies by a connector.

11. The manufacturing method of the electrode assembly according to claim 10, wherein the step of connecting the head end and tail end of every two of the plurality of separator bodies by the connector further comprises:
providing a joint adhesive formed by one of a polyethylene terephthalate, an epoxy resin, a polyurethane, an unsaturated polyester resin, a phenolic resin, a polyacrylic resin, a polyvinyl chloride resin, a polysulfide rubber, a silicone rubber, a polyurethane rubber, a neoprene rubber, and butyl rubber, or any mixture thereof, to adhesively connect the head end and tail end of every two adjacent separator bodies.

12. The manufacturing method of the electrode assembly according to any one of claims 9-11, the step of providing the early warning coating on the separator body further comprises:
extending application of the early warning coating along the length direction of the separator body, and extending application of the early warning coating along a width direction of the separator body.

13. The manufacturing method of the electrode assembly according to claim 12, wherein the step of extending the application of the early warning coating along the length direction of the separator body further comprise:
applying the early warning coating with a second preset length along the length direction of the separator body, in which a range of the second preset length is between 1 mm and 2000 mm.

14. The manufacturing method of the electrode assembly according to claim 12, wherein the step of extending the application of the early warning coating along the length direction of the separator body further comprise:
applying the early warning coating with a second preset length along the length direction of the separator body, in which a range of the second preset length is between 10 mm and 50 mm.

15. The manufacturing method of the electrode assembly according to claim 12, wherein the step of extending the application of the early warning coating along the width direction of the separator body further comprises:
applying the early warning coating along the width direction of the separator body such that a distance between each of two side edges of the early warning coating and a corresponding edge of two side edges of the separator body is in a range of between 1 mm and 2000 mm.

16. The manufacturing method of the electrode assembly according to claims 9-15, wherein, before the step of providing the early warning coating on the separator body, the method further comprises:
providing the early warning coating, wherein the early warning coating is made of one of a rubber, a polyacrylic acid, a polymethacrylic acid, a polymethyl acrylate, a polyethyl acrylate, a pure acrylic emulsion, a polyacrylic acid-styrene copolymer, a polyvinylpyrrolidone, a styrene-butadiene rubber, an epoxy resin, a neopentyl glycol diacrylate, a sodium polyacrylate series, a fluorine-containing polyolefin, or any mixture thereof.

17. A manufacturing equipment for manufacturing the electrode assembly according to claims 1-16, the manufacturing equipment comprising:
a winding apparatus, configured for stacking and winding the cathode plate of the cathode plate roll, the separator body of the separator roll, and the anode plate of the anode plate roll; and
a detection apparatus, located on a convey path of the separator body of the separator roll and configured for detecting whether the separator body is provided with the early warning coating.

18. A battery cell, comprising:
a casing, and
an electrode assembly accommodated in the casing and manufactured by the manufacturing method of the electrode assembly according to claims 1-16.

19. A battery comprising the battery cell according to claim 18.

20. An electrical device, comprising the battery according to claim 19, wherein the battery is configured for providing an electrical energy.
